# EUROPEAN PATENT APPLICATION

(11) **EP 4 576 233 A1**
(43) Date of publication of application: **25.06.2025**
(21) Application number: 23883079.8
(22) Date of filing: 25.10.2023
(51) Int. Cl.: H01M 4/04, H01M 10/052

(54) **METHOD FOR PREPARATION OF SECONDARY BATTERY ELECTRODE SLURRY**

(30) Priority: 25.10.2022 KR 20220138646; 22.08.2023 KR 20230109659
(71) Applicant: SK On Co., Ltd., Seoul 03161 (KR)
(72) Inventor: YANG, Jungmin, Daejeon 34124 (KR); KIM, Minhwan, Daejeon 34124 (KR); KIM, Jaeyoun, Daejeon 34124 (KR)
(74) Representative: Prüfer & Partner mbB Patentanwälte · Rechtsanwälte
(86) International application number: PCT/KR2023/016607
(87) International publication number: WO 2024/090974

(57) **Abstract**

According to the present disclosure, there is provided a method for preparing an electrode slurry for a secondary battery, the method including a step a) of feeding raw materials including an electrode active material, a conductive agent, and a thickener into a mixer; and a step b) of feeding a solvent into the mixer and kneading the raw materials, wherein the thickener in the step a) is in a solid state.

## Description

### [Technical Field]

The present disclosure relates to a method for preparing an electrode slurry for a secondary battery and a secondary battery electrode manufactured using the same.

### [Background Art]

Global warming issues in modern society and the demand for eco-friendly technologies as a response to the issues have rapidly increased. In particular, in accordance with an increase in technical demand for an electric vehicle and an energy storage system (ESS), the demand for a lithium secondary battery, which has been spotlighted as an energy storage device, has also exploded. Accordingly, studies to improve lifespan characteristics of lithium secondary batteries have been conducted.

An electrode slurry for a lithium secondary battery is prepared by mixing and dispersing an electrode active material, a conductive agent, a thickener, and a binder with a solvent for a certain period of time using a mixer. In general, in a case where a solid content in the electrode slurry is low, binder migration occurs when the electrode slurry is applied to a current collector and then dried, which causes an adverse effect on electrode quality, such as the occurrence of cracking. Therefore, efforts are being made to suppress binder migration by increasing the solid content in the electrode slurry. However, when the solid content in the electrode slurry increases, the viscosity increases, which makes it difficult to perform processes such as conveyance and application.

Accordingly, efforts are required to improve the solid content in the slurry while securing a viscosity that enables coating.

In addition, there is a need to conduct studies on how to continuously prepare an electrode slurry without limitations due to factors such as a capacity of a mixing tank and equipment load and also to improve slurry quality.

### [Disclosure]

### [Technical Problem]

According to an aspect of the present disclosure, a solid content in an electrode slurry for a secondary battery is increased, and a slurry viscosity that enables coating is secured, such that the quality of a coated electrode may be improved.

According to another aspect of the present disclosure, it is possible to provide a method for continuously preparing an electrode slurry for a secondary battery.

### [Technical Solution]

In one general aspect, a method for preparing an electrode slurry for a secondary battery includes: a step a) of feeding raw materials including an electrode active material, a conductive agent, and a thickener into a mixer; and a step b) of feeding a solvent into the mixer and kneading the raw materials.

According to an embodiment of the method for preparing an electrode slurry for a secondary battery according to the present disclosure, the mixer may be an extruder.

According to another embodiment of the method for preparing an electrode slurry for a secondary battery according to the present disclosure, the step b) may be performed by both a conveying part including a conveying screw and a mixing part including a kneading block in the extruder.

According to another embodiment of the method for preparing an electrode slurry for a secondary battery according to the present disclosure, the conveying part and the mixing part in the extruder may be sequentially and repeatedly provided in a conveying direction.

According to another embodiment of the method for preparing an electrode slurry for a secondary battery according to the present disclosure, the method may further include a step of controlling a viscosity by feeding a solvent into the extruder.

According to another embodiment of the method for preparing an electrode slurry for a secondary battery according to the present disclosure, the method may further include a step of controlling a viscosity by feeding a solvent into the extruder, wherein the solvent may be fed into the extruder at a point of 40 to 70% of a total length in a conveying direction.

According to another embodiment of the method for preparing an electrode slurry for a secondary battery according to the present disclosure, an internal temperature of the extruder may be 25°C to 60°C.

According to another embodiment of the method for preparing an electrode slurry for a secondary battery according to the present disclosure, the electrode may be a negative electrode.

According to another embodiment of the method for preparing an electrode slurry for a secondary battery according to the present disclosure, a solid content in the prepared slurry may be 50% to 65%.

According to another embodiment of the method for preparing an electrode slurry for a secondary battery according to the present disclosure, a viscosity of the prepared slurry may be 20,000 cp or less.

In another general aspect, a system for preparing an electrode slurry for a secondary battery includes: a raw material feeding part including an electrode active material, a conductive agent, and a thickener; an extrusion part for simultaneously kneading and conveying the raw materials; a first solvent feeding part disposed on one side of the extrusion part in a longitudinal direction; and a second solvent feeding part disposed on the other side of the extrusion part in the longitudinal direction.

In the system for preparing an electrode slurry for a secondary battery according to the present disclosure, the second solvent feeding part may be disposed at a rear end of the first solvent feeding part in a conveying direction.

In the system for preparing an electrode slurry for a secondary battery according to the present disclosure, the second solvent feeding part may be disposed at a point of 40% to 70% of a total length in a conveying direction in the extrusion part.

In still another general aspect, a method for manufacturing an electrode includes a step of applying an electrode slurry prepared according to the above embodiment onto a current collector.

In still another general aspect, a secondary battery includes the manufactured electrode.

### [Advantageous Effects]

In the method for preparing an electrode slurry for a secondary battery according to the present disclosure, a slurry having a high solid content may be coated, such that binder migration may be suppressed, thereby obtaining the effect of improving electrode quality.

In addition, as a slurry solid content is increased, the amount of solvent to be dried is reduced, and a length of a drying furnace may be reduced, which may implement investment cost savings, and productivity may be improved through an increase in coating speed in the same drying furnace.

Furthermore, the method for preparing an electrode slurry for a secondary battery according to the present disclosure has the effect of significantly improving production since the electrode slurry may be continuously prepared without limitations due to a capacity of a mixing tank and equipment load.

### [Description of Drawings]

FIG. 1 is a schematic view of a specimen obtained by selecting five points with equal intervals in a longitudinal direction of a negative electrode active material layer and punching the points in a circular shape having a diameter of 38 mm to evaluate homogeneity of the negative electrode active material layer.
FIG. 2 is a diagram showing lifespan characteristics of secondary batteries including electrodes manufactured according to Example 1 and Comparative Examples 1 and 2 of the present disclosure.

### [Best Mode]

Hereinafter, the present disclosure will be described in detail. However, this is merely illustrative, and the present disclosure is not limited to specific embodiments which are illustratively described. Specific contents for implementing the present disclosure will be described in detail with reference to the accompanying drawings below. The same reference numerals refer to the same components regardless of the drawings. The term "and/or" includes any and all combinations of one or more of the listed items.

Throughout the present specification, unless explicitly described to the contrary, "comprising" any components will be understood to imply further inclusion of other components rather than the exclusion of any other components. In addition, singular forms are intended to include plural forms, unless the context clearly indicates otherwise.

In the present specification, when a part such as a layer, a film, a region, a plate, or the like is positioned "on" or "above" another part, this includes not only a case where the part is "directly on" another part but also a case where another part is interposed therebetween.

According to the present disclosure, there is provided a method for preparing an electrode slurry for a secondary battery, the method including a step a) of feeding raw materials including an electrode active material, a conductive agent, and a thickener into a mixer; and a step b) of feeding a solvent into the mixer and kneading the fed raw materials, wherein the thickener in the step a) is in a solid state.

The mixer may be in the form of an extruder capable of kneading and conveying simultaneously, but is not limited thereto.

In the step a), the raw materials including an electrode active material, a conductive agent, and a thickener are fed into a raw material feeding part of the extruder.

The thickener is used to increase the dispersibility of the electrode active material, also acts as a binder to some extent, and is usually used in a solution state dispersed in a solvent. In a conventional slurry preparation process, a thickener is pre-dissolved in a solvent and then fed into a mixer, but it is difficult to reduce the amount of solvent due to the low solubility of the thickener, and for this reason, there is a limit to increasing a final slurry solid content. In contrast, in the present disclosure, a solid content in the electrode slurry may be increased by directly feeding and mixing a thickener in a solid state. In addition, a stability problem of a slurry viscosity, which may be caused when mixing the thickener in a solid state, is solved by performing kneading and conveying using the extruder. That is, a slurry having an increased solid content while securing a slurry viscosity that enables coating may be prepared, and as a result, the coating quality of the electrode may be significantly improved.

The thickener may be a cellulose-based compound, and specifically, carboxymethyl cellulose, hydroxypropylmethyl cellulose, methyl cellulose, or a mixture of one or more of salts of alkali metals thereof may be used. Na, K, or Li may be used as the alkali metal.

Any electrode active material may be used without limitations as long as it is an electrode active material commonly used in a secondary battery. Examples of a negative electrode active material include, but are not limited to, a carbon-based negative electrode active material, a silicon-based negative electrode active material, or a mixture thereof. The carbon-based negative electrode active material may be one or more selected from artificial graphite, natural graphite, and hard carbon. The silicon-based negative electrode active material may be Si, SiOₓ (0 < x < 2), a Si-Q alloy (Q is an element selected from the group consisting of an alkali metal, an alkaline earth metal, a group 13 element, a group 14 element, a group 15 element, a group 16 element, a transition metal, a rare earth element, and a combination thereof, but is not Si), a Si-carbon composite, or a mixture of at least one of these materials and SiO₂. A positive electrode active material may be a composite oxide of lithium and a metal selected from cobalt, manganese, nickel, and a combination thereof, but is not limited thereto.

The raw materials may include a binder, and may further include a conductive agent to improve conductivity.

The binder is not particularly limited as long as it is a conventional binder capable of well adhering electrode active material particles to each other while well adhering the electrode active material to a current collector. As an example, the binder may be an aqueous binder, and specifically, may be styrene-butadiene rubber, acrylated styrene-butadiene rubber, polyvinyl alcohol, sodium polyacrylate, a copolymer of propylene and an olefin having 2 to 8 carbon atoms, a copolymer of (meth)acrylic acid and (meth)acrylic acid alkyl ester, or a combination thereof. In this case, the binder may be fed into the extruder in a solution state in which a solid content is 20 to 60 wt%, for example, 30 to 50 wt%, but is not limited thereto.

Any solvent may be used without limitations as long as it is a solvent commonly used in the electrode slurry. Specifically, a solvent for a negative electrode may be, but is not limited to, at least one selected from the group consisting of water, pure water, deionized water, distilled water, ethanol, isopropanol, methanol, acetone, n-propanol, and t-butanol. A solvent for a positive electrode may be, but is not limited to, at least one selected from the group consisting of an amine-based solvent such as N,N-dimethylaminopropylamine or diethyltriamine; an ether-based solvent such as ethylene oxide or tetrahydrofuran; a ketone-based solvent such as methyl ethyl ketone; an ester-based solvent such as methyl acetate; and an aprotic polar solvent such as dimethylacetamide or N-methyl-2-pyrrolidone.

The conductive agent may be one or more selected from the group consisting of carbon nanotubes, acetylene black, carbon black, natural graphite, artificial graphite, Ketjen black, and carbon fibers, and the conductive agent may be fed into the extruder in a solution state in which a solid content is 0.5 to 2 wt%, for example, 0.5 to 1.8 wt%, but is not limited thereto. The solvent used at this time is the same as described above.

The step b) is a step of feeding a solvent into a mixer and kneading the fed raw materials, and specifically, the mixer may be in the form of an extruder. The raw materials fed through the extruder are continuously kneaded and conveyed and extruded onto an outer surface of a substrate to enable continuous coating. Specifically, a screw of the extruder is rotated to mix the raw materials, and the mixed result is pushed to pass through a die mounted in front of a cylinder of the extruder, thereby coating the outer surface of the substrate.

The step b) of feeding the solvent may be performed at a point of 5% to 30%, for example, at a point of 7% to 27%, of a total length in a conveying direction in the extruder. The solvent is the same as described above, and may advantageously be water, but is not limited thereto.

The kneading and conveying may be performed simultaneously by a plurality of conveying parts and mixing parts in the extruder. Specifically, the raw materials fed into the raw material feeding part of the extruder may be conveyed to the mixing part by the conveying part, and then, kneading may be performed. Thereafter, the raw materials may be conveyed again by the conveying part in a die direction of the extruder. The conveying part and the mixing part may be sequentially and repeatedly provided in a conveying direction.

The conveying part may include a conveying screw having a continuous pitch.

The mixing part may include a kneading block.

The kneading block has a structure in which oval-shaped disks are arranged at a certain angle, and may be classified into forward, reverse, and neutral kneading blocks depending on a direction in which the raw materials advance. Specifically, the forward kneading block is a kneading block in which the raw materials move downstream toward the die direction of the screw by the rotation of the kneading block, whereas the reverse kneading block is a kneading block in which the raw materials move in the opposite direction to the direction in which the raw materials advance, that is, move upstream. The neutral kneading block is a kneading block in which the raw materials do not move forward or backward due to the rotation of the screw.

In order to secure a residence time of the fed raw materials in the extruder and to ensure a sufficient kneading process, the screw assembly in the extruder is located in the middle of each of the forward/reverse directions, the forward/neutral/reverse directions, and the like to perform sufficient kneading.

The conveying screw located at an end of the mixing part along the direction in which the raw materials advance may be a reverse conveying screw. Meanwhile, the direction in which the raw materials advance itself is not changed to the reverse direction by the reverse conveying screw, and most of the raw materials are conveyed in the die direction of the extruder.

A combination of kneading blocks included in the mixing part may include various combinations without limitations, as long as a reverse kneading block is arranged at the end along the direction in which the raw materials advance. However, it is preferable that the kneading block arranged in succession with the reverse kneading block among the plurality of kneading blocks is a forward kneading block.

A combination ratio of the mixing part and the conveying part in the extruder may be 55:45 to 80:20, and specifically, 60:40 to 75:25. Accordingly, the fed raw materials during the extruder residence period may be uniformly mixed, and an adsorption amount of the binder and the conductive agent for the electrode active material may be increased.

During the step b), a step of controlling a viscosity by additionally feeding a solvent into the extruder may be further included. Specifically, the solvent may be fed into the extruder at a point of 50% to 75% of a total length of the screw of the extruder, and the solvent is the same as described above. A solid content in the mixing step may be controlled by additionally feeding the solvent, which affects the slurry viscosity. When the solid content in the mixing step is higher than an appropriate range, the slurry viscosity decreases, resulting in an increase in adsorption force between the thickener and the electrode active material, and a final slurry viscosity decreases. When the solid content in the mixing step is lower than the appropriate range, conversely, the adsorption force between the thickener and the electrode active material decreases, such that the final slurry viscosity increases. Therefore, it is required to select an appropriate range of solid content in the mixing step that does not reduce electrode adhesion and cell performance, and the solid content in the mixing step may be 55% to 80%, for example, 60% to 75% or 65% to 70%.

The final solid content in the electrode slurry after the mixing and conveying steps may be 40% to 65%, for example, 45% to 60% or 46% to 57%.

Meanwhile, in terms of preparing an electrode slurry in which the fed raw materials are uniformly dispersed within the residence time, an internal temperature of the extruder may be 25°C to 60°C, for example, 25°C to 35°C.

The present disclosure also provides a method for manufacturing an electrode, the method including a step of applying an electrode slurry prepared according to an embodiment of the present disclosure onto a current collector.

The application may be performed using any application method known to be generally used to form a film by applying a liquid. For example, spray coating, dip coating, spin coating, gravure coating, slot die coating, doctor blade coating, roll coating, inkjet printing, slot die coating, lexographic printing, screen printing, electrostatic hydrodynamic printing, micro-contact printing, imprinting, reverse offset printing, bar coating, gravure offset printing, and the like may be used, but are not limited thereto.

The current collector may be selected from the group consisting of a copper foil, a nickel foil, a stainless steel foil, a titanium foil, a nickel foam, a copper foam, a polymer substrate coated with a conductive metal, and a combination thereof, but is not limited thereto.

The current collector to which the electrode slurry is applied may include an electrode active material layer formed thereon through a drying process under conditions of 100 to 300°C, for example, 100 to 250°C. In this case, the current collector to which the electrode slurry is applied may increase adhesion between the electrode active material in the electrode slurry and the current collector through a rolling process prior to the drying process. Specifically, the rolling process may be performed by passing the current collector to which the electrode slurry is applied between two or more rotating rolls, but is not limited thereto.

The present disclosure also provides a secondary battery including an electrode manufactured according to an embodiment of the present disclosure.

Specifically, the electrode according to the present disclosure may have improved substrate adhesion and thickness uniformity. Accordingly, a secondary battery including the electrode may have further improved long-term stability, which is preferable.

The electrode may be a positive electrode or a negative electrode depending on the type of electrode active material included in the electrode active material layer. The electrode active material is the same as described above.

The secondary battery may further include a separator positioned between a positive electrode and a negative electrode; and an electrolyte.

The separator may be selected from a glass fiber, polyester, polyethylene, polypropylene, polytetrafluoroethylene, or a combination thereof, and may be in a form of a non-woven fabric or a woven fabric. In a lithium secondary battery, for example, a separator formed of a polyolefin-based polymer such as polyethylene or polypropylene may be mainly used, a separator coated with a composition containing a ceramic component or a polymer material may be used to secure heat resistance and mechanical strength, a separator having a single layer or multilayer structure may be selectively used, or a separator known in the related art may be used. However, the present disclosure is not limited thereto.

The electrolyte may contain an organic solvent and a lithium salt.

The organic solvent functions as a medium through which ions involved in an electrochemical reaction of the battery may move. For example, a carbonate-based solvent, an ester-based solvent, an ether-based solvent, a ketone-based solvent, an alcohol-based solvent, or an aprotic solvent may be used. These organic solvents may be used alone or as a mixture of two or more thereof. When a mixture of two or more organic solvents is used, a mixing ratio may be appropriately controlled according to a desired battery performance. Meanwhile, an organic solvent known in the art may be used, but the present disclosure is not limited thereto.

The lithium salt is a substance that dissolves in an organic solvent and acts as a source of lithium ions in the battery to enable a basic operation of a lithium secondary battery and promote movement of the lithium ions between a positive electrode and a negative electrode. Examples of the lithium salt include LiPF₆, LiBF₄, LiSbF₆, LiAsF₆, LiN(SO₃C₂F₅)₂, LiN(CF₃SO₂)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCl, LiI, LiB(C₂O₄)₂, and a combination thereof. However, the present disclosure is not limited thereto.

A concentration of the lithium salt may be, for example, 0.1 M to 2.0 M. When the concentration of the lithium salt is within the above range, the electrolyte has appropriate conductivity and viscosity; thus, an excellent performance of the electrolyte may be exhibited and the lithium ions may effectively move.

In addition, in order to improve charging and discharging characteristics, flame retardant characteristics, and the like, the electrolyte may further contain pyridine, triethyl phosphate, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like, if necessary. In some cases, in order to impart non-inflammability, the electrolyte may further contain a halogen-containing solvent such as carbon tetrachloride or trifluoroethylene, and in order to improve high-temperature storage characteristics, the electrolyte may further contain fluoro-ethylene carbonate (FEC), propene sulfone (PRS), fluoro-propylene carbonate (FPC), and the like.

In a method for manufacturing a secondary battery according to the present disclosure in order to achieve the objects as described above, a battery may be manufactured by sequentially stacking the manufactured negative electrode, separator, and positive electrode to form an electrode assembly, putting the manufactured electrode assembly into a cylindrical battery case or a prismatic battery case, and then injecting an electrolyte. Alternatively, a battery may be manufactured by stacking the electrode assembly, impregnating the electrode assembly with an electrolyte, putting the resulting product into a battery case, and sealing the battery case.

As the battery case used in the present disclosure, a battery case commonly used in the art may be adopted. An external shape according to the use of the battery is not limited, for example, a cylindrical, prismatic, pouch, or coin type case using a can may be used.

The secondary battery according to the present disclosure may be used as a battery cell used as a power source for a small sized device, and may also be preferably used as a unit cell in a medium and large sized battery module including a plurality of battery cells. Preferred examples of the medium and large sized device include, but are not limited to, an electric vehicle, a hybrid electric vehicle, a plug-in hybrid electric vehicle, and a system for storing power.

### [Best Mode]

Hereinafter, examples of the present disclosure will be further described with reference to specific experimental examples. The examples and comparative examples included in the experimental examples are merely illustrative of the present disclosure and do not limit the scope of the accompanying claims, it is obvious to those skilled in the art that various modifications and alterations may be made without departing from the spirit and scope of the present disclosure, and it is obvious that these modifications and alterations are within the accompanying claims.

### {Examples}

### (Example 1)

### Step 1: Preparation of Negative Electrode Slurry

The raw materials shown in Table 1 were fed into a raw material feeding part of each extruder. At this time, the conductive agent and the SBR binder were fed into the feeding part in a liquid state, and CMC was fed into the feeding part in a powder state.

A conveying screw and a kneading block in the extruder were configured in a combination of 3:7.

Next, kneading and conveying processes were performed under conditions of a screw rotation speed of 1,200 rpm and an internal temperature of 25 to 30°C, distilled water was fed in an amount of 30 to 35 wt% with respect to 100 parts by weight of the solid raw materials through a liquid feeding part positioned at a point of 8 to 14% of the total length of the screw of the extruder, sufficient kneading was performed, and then, the remaining distilled water was fed into the feeding part at a point of 42 to 56%, thereby preparing a negative electrode slurry having a final solid content of 55%.

**[Table 1]**

| | Specific substance | State | Content (wt%) |
|---|---|---|---|
| Electrode active material | Negative electrode active material/Si | Solid | 96.5 |
| Binder | SBR | Liquid | 1.5 |
| Thickener | Carboxymethyl cellulose (CMC) | Solid | 1.3 |
| Conductive agent | CNT | Liquid | 0.6 |

### Step 2: Manufacture of Negative Electrode

The negative electrode slurry prepared in the step 1 was applied onto a copper current collector (6 µm-thick copper foil) using a coater. Subsequently, a negative electrode active material layer was completed by drying for 1 minute in a drying furnace heated with hot air at 120°C. At this time, a thickness of the negative electrode active material layer was set to be 50 um.

### Step 3: Manufacture of Secondary Battery

The negative electrode and the positive electrode were notched with predetermined sizes and stacked, a separator (polyethylene, thickness of 13 µm) was interposed between the negative electrode and the positive electrode to form an electrode cell, and then a tab portion of each of the negative electrode and the positive electrode was welded. The welded positive electrode/separator/negative electrode assembly was placed in a pouch, three sides except for an electrolyte injection side were sealed, the electrolyte was injected through the remaining sides except for the sealing side, and the assembly was impregnated for 12 hours or longer, thereby manufacturing a 1 Ah-class pouch cell.

The positive electrode was manufactured by applying a slurry containing 96 wt% of Li[Ni_{0.6}Co_{0.2}Mn_{0.2}]O₂, 2 wt% of carbon black, and 2 wt% of a PVDF binder onto an aluminum current collector (aluminum foil having a thickness of 12 µm).

The electrolyte was prepared by dissolving 1 M LiPF₆ in a mixed solvent of EC/EMC/DEC (25/45/30: volume ratio) and then adding 1 wt% of vinylene carbonate (VC), 0.5 wt% of 1,3-propenesultone (PRS), and 0.5 wt% of lithium bis(oxalato)borate (LiBOB).

### (Comparative Example 1)

The same procedure as that of Example 1 was performed, except that, in the step 1, a negative electrode slurry was prepared using a general mixer (Planetary Despa Mixer (PD mixer)) instead of the slurry preparation method using an extruder. Specifically, the raw materials shown in Table 1 and 30 to 35 wt% of distilled water based on 100 parts by weight of the raw materials were subjected to a kneading process using a PD mixer for 60 minutes, thereby preparing a negative electrode slurry.

### (Comparative Example 2)

The same procedure as that of Comparative Example 1 was performed, except that a thickener solution (same thickener content) was fed instead of the thickener in a solid state.

### {Evaluation Examples}

### Evaluation Example 1: Evaluation of Viscosity and Adhesion of Negative Electrode Slurry According to Method for Preparing Slurry

A viscosity of each of the negative electrode slurries prepared in Example 1 and Comparative Examples 1 and 2 was measured at a shear rate of 0.1 s⁻¹ for each slurry using a rotational viscometer.

The negative electrode manufactured in each of Example 1 and Comparative Examples 1 and 2 was cut to 18 mm in width and 150 mm in length, and a tape having a width of 18 mm was attached to the foil layer of the negative electrode so that the tape sufficiently adhered using a roller having a load of 2 kg. The active material layer of the negative electrode was attached to one side of a tensile tester using a double-sided tape. The tape attached to the foil was fastened on the opposite side of the tensile tester and the adhesion was measured.

The results of measuring the viscosity and adhesion of Example 1 and Comparative Examples 1 and 2 are shown in Table 2.

**[Table 2]**

| | Solid content (%) | Viscosity (cp@0.1s⁻¹) | Adhesion (N) |
|---|---|---|---|
| Example 1 | 56.9 | 123, 000 | 0.31 |
| Comparative Example 1 | 57.2 | 2,319 | 0.19 |
| Comparative Example 2 | 45.7 | 210,000 | 0.33 |

Referring to Table 2, in Example 1 and Comparative Example 1, the solid content was higher than that in Comparative Example 2 because the thickener was fed in a solid state. However, in Comparative Example 1, the solid content was high, but the viscosity and electrode adhesion decreased. In contrast, in Example 1, it was confirmed that the viscosity was maintained and the adhesion was excellent even though the slurry composition was prepared with a high solid content.

Meanwhile, in Comparative Example 2, as the thickener was pre-dissolved, the viscosity and the adhesion did not decrease, but the use of an additional solvent was required, and the solid content in the final slurry was also lower than that in Example 1.

### Evaluation Example 2: Evaluation of Application Uniformity in Width Direction of Negative Electrode Active Material Layer and Lifespan Characteristics According to Method for Preparing Slurry

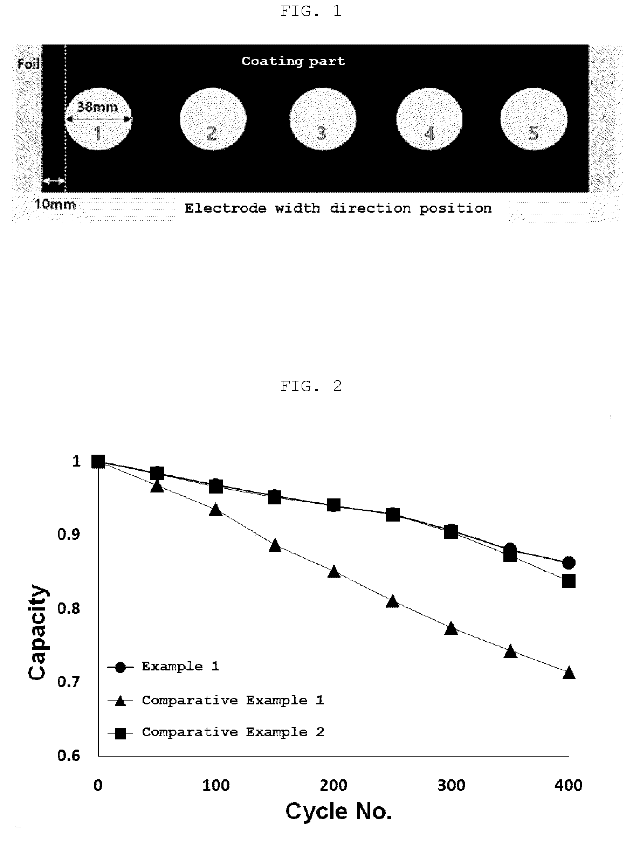

In order to analyze the application uniformity in the width direction of each of the negative electrode active material layers prepared in Example 1 and Comparative Examples 1 and 2, as in FIG. 1, five points with equal intervals in the longitudinal direction of the negative electrode active material layer were selected and punched in a circular shape having a diameter of 38 mm, and then, the weight of the negative electrode active material layer in the punched specimen (the loading amount of the negative electrode active material layer composition) was measured. Next, a difference ((Wₘₐₓ-Wₘᵢₙ)/W*100, %) between the maximum negative electrode active material layer loading value (Wₘₐₓ) and the minimum negative electrode active material layer loading value (Wₘᵢₙ) measured at the five points compared to the average negative electrode active material layer loading value (W) is shown in Table 3.

In addition, the charge and discharge performance was evaluated under 1 C charge/1C discharge conditions using each of the secondary batteries manufactured in Example 1 and Comparative Examples 1 and 2. The change in capacity according to the number of cycles is illustrated in FIG. 2, and the results of the capacity retention rate for 300 cycles are shown in Table 3.

**[Table 3]**

| | (Wₘₐₓ-Wₘᵢₙ)/W*100, % | Capacity retention rate (%, @300 cycle) |
|---|---|---|
| Example 1 | 2.49 | 84 |
| Comparative Example 1 | 2.51 | 71 |
| Comparative Example 2 | 2.50 | 86 |

Referring to Table 3, in the case of Example 1, the difference in negative electrode active material layer loading value depending on whether an extruder was used and the state of the thickener to be fed during the preparation of the negative electrode slurry was 2.49%, which was equivalent to or higher than 2.51% and 2.50% of Comparative Examples 1 and 2 using a PD mixer. That is, in the case where the negative electrode slurry is prepared using the extruder of Example 1, it can be seen that the loading amount in the center and the loading amount in the outer portion are uniformly distributed.

In the case where the negative electrode slurry was prepared using the extruder of Example 1, it was determined that the dispersibility of the active material in the slurry was improved, and the adsorption amount of the binder and the conductive agent to the active material particles was increased, thereby increasing the application uniformity and the capacity retention rate. On the other hand, in the case of Comparative Example 1, it was confirmed that the capacity retention rate was significantly reduced because it was difficult to prepare a slurry having improved dispersibility when the thickener was mixed in a solid state in the PD mixer.

On the other hand, in the case of Comparative Example 2 in which the thickener was fed in a solution state in which a thickener was pre-dissolved in a solvent, the capacity retention rate was similar to that of Example 1, but there was a problem of the occurrence of binder migration in the drying step after application due to a low solid content. In addition, a process of dissolving the thickener should be required, and using an additional solvent causes an increase in drying time and the like. On the other hand, in the case of Example 1, as the thickener raw material in a solid state may be directly fed into the extruder without a dissolution step, a thickener solution preparation process is unnecessary; thus, the continuous productivity of the slurry is high, and the drying efficiency is improved due to a high slurry solid content, which improves the cell performance.

The content described above is merely an example of applying the principles of the present disclosure, and other configurations may be further included without departing from the scope of the present invention.

## Claims

1. A method for preparing an electrode slurry for a secondary battery, the method comprising:
a step a) of feeding raw materials including an electrode active material, a conductive agent, and a thickener into a mixer; and
a step b) of feeding a solvent into the mixer and kneading the raw materials,
wherein the thickener in the step a) is in a solid state.

2. The method of claim 1, wherein the mixer is an extruder.

3. The method of claim 2, wherein the step b) is performed by both a conveying part including a conveying screw and a mixing part including a kneading block in the extruder.

4. The method of claim 3, wherein the conveying part and the mixing part in the extruder are sequentially and repeatedly provided in a conveying direction.

5. The method of claim 2, further comprising a step of controlling a viscosity by feeding a solvent into the extruder.

6. The method of claim 5, wherein the solvent is fed into the extruder at a point of 40 to 70% of a total length in a conveying direction.

7. The method of claim 2, wherein an internal temperature of the extruder is 25°C to 60°C.

8. The method of claim 1, wherein the electrode is a negative electrode.

9. The method of claim 8, wherein a solid content in the prepared slurry is 50% to 65%.

10. The method of claim 8, wherein a viscosity of the prepared slurry is 20,000 cp or less.

11. A system for preparing an electrode slurry for a secondary battery, the system comprising:
a raw material including an electrode active material, a conductive agent, and a thickener feeding part;
an extrusion part for simultaneously kneading and conveying the raw materials;
a first solvent feeding part disposed on one side of the extrusion part in a longitudinal direction; and
a second solvent feeding part disposed on the other side of the extrusion part in the longitudinal direction.

12. The system of claim 11, wherein the second solvent feeding part is disposed at a rear end of the first solvent feeding part in a conveying direction.

13. The system of claim 11, wherein the second solvent feeding part is disposed at a point of 40% to 70% of a total length in a conveying direction in the extrusion part.

14. A method for manufacturing an electrode, the method comprising a step of applying an electrode slurry prepared according to any one of claims 1 to 10 onto a current collector.

15. A secondary battery comprising an electrode manufactured according to claim 14.
